# EUROPEAN PATENT SPECIFICATION

(11) **EP 1 395 539 B1**
(45) Date of publication and mention of the grant of the patent: **22.04.2009**
(21) Application number: 02724343.5
(22) Date of filing: 16.05.2002
(51) Int. Cl.: C07C 37/82, D21B 1/00, B21B 1/02, D21C 1/00, D21C 1/02

(54) **A METHOD FOR ISOLATING PHENOLIC SUBSTANCES OR JUVABIONES FROM WOOD COMPRISING KNOTWOOD**
VERFAHREN ZUR ISOLIERUNG PHENOLISCHER SUBSTANZEN BZW. JUVABIONEN AUS KNÖTERICH ENTHALTENDEM HOLZ
PROCEDE RELATIF A L'ISOLATION DE SUBSTANCES PHENOLIQUES OU DE JUVABIONES DANS DU BOIS NOUEUX

(30) Priority: 06.06.2001 US 295797 P; 06.06.2001 FI 20011194
(43) Date of publication of application: 10.03.2004
(73) Proprietor: Oy Arbonova AB, 20500 Åbo (FI)
(72) Inventor: Holmbom, Bjarne, 20540 Åbo (FI); Eckerman, Christer, 20540 Åbo (FI); Hemming, Jarl, 20500 Åbo (FI); Reunanen, Markku, 20100 Åbo (FI); Sundberg, Kenneth, 20540 Åbo (FI); Willför, Stefan, 20960 Åbo (FI)
(74) Representative: Öhman, Ann-Marie
(86) International application number: PCT/FI2002/000418
(87) International publication number: WO 2002/098830

(56) References cited:
- WO-A1-02/09893
- GB-A- 2 063 856
- US-A- 5 335 790
- ANDEREGG ROBERT J. ET AL.: 'Lignans, the major component of resin from araucaria angustifolia knots' AMERICAN CHEMICAL SOCIETY THIRD UNDERGRADUATE RESEARCH SYMPOSIUM vol. 28, no. 5, 28 April 1973, pages 171 - 175, XP002956502

## Description

### FIELD OF THE INVENTION

This invention relates to a method for isolating chemical substances, i.e. phenolic substances or juvabiones from wood comprising knotwood.

### BACKGROUND OF THE INVENTION

It is known that vegetabilic sources, including wood, contain phenolic substances which are more or less hydrophilic. The phenolic substances derived from wood are flavonoids, lignans and stilbenes. In spruce wood the dominant group is lignans while flavonoids and stilbenes are the dominant phenolic substances in pine wood and hardwoods. Freudenberg and Knof (1) identified already in 1957 many different lignans in Norway spruce, including e.g. hydroxymatairesinol, matairesinol, conidendrin, pinoresinol, oxomatairesinol, lariciresinol, allohydroxymatairesinol and liovil. In addition to these lignans, isolariciresinol, secoisolariciresinol, picearesinol and conidendric acid have been isolated from spruce (2).

Pinosylvin (a stilbene) and flavonoids have been identified in pine wood. The flavonoids aromadendrin and taxifolin have been isolated from larch wood. Both stilbenes and flavonoids have been isolated from hardwoods.

Many of these phenolic compounds have been reported to possess valuable therapeutical properties, particularly as antitumour agents and antioxidants. (S Nishibe, 1997, (3)), JD Ford et al 1999 (4) and N M Saarinen et al 2000 (5)).

Juvabiones are a group of cyclohexane derivatives and are useful e.g. as insecticides.

Before this invention, it has not been known that the knots and branches of the trees are particularly rich in flavonoids and stilbenes, compared to other parts of the tree.

Although it is been mentioned in the literature (2) that certain lignans, particularly hydroxymatairesinol, occur in wood and branches, so far no practically useful method has been presented for isolating such compounds from wood.

### SUMMARY OF THE INVENTION

This invention in based on the idea of combining the isolation of phenolic substances or juvabiones from wood with the utilization of wood in manufacturing of pulp or various mechanical wood products. The aim of this invention is thus to i) provide a practically useful source for these useful chemical substances and ii) improve the economy for the manufacturing processes of pulp or mechanical wood products in that by-products, hitherto used only for energy production, are offered a new use as source for phenolic substances and juvabiones.

Thus, this invention relates to a method for isolating of phenolic substances or juvabiones from wood comprising knotwood, said method comprising the steps of
a) extracting
   i) the over-sized chip fraction obtained by screening chipped wood, or
   ii) knotwood obtained as residue in finishing of mechanical wood products with a polar solvent, and
b) recovering the extract,
wherein
the wood is coniferous wood selected from the group consisting of
- spruce wood of the genus Picea, and the isolated substance is a lignan such as hydroxymatairesinol, secoisolariciresinol or liovil, preferably hydroxymatairesinol,
- fir wood of the genus Abies and the isolated substance is a lignan such as secoisolariciresinol, lariciresinol or isolariciresinol, preferably secoisolariciresinol, or the isolated substance is epijuvabione or dehydrojuvabione,
- Larix genus and the isolated substance is a lignan such as secoisolariciresinol, lariciresinol or isolariciresinol, preferably secoisolariciresinol; or a flavonoid such as catechin, taxifolin or dihydrokaempferol,
- pine wood of the genus Pinus and the isolated substance is a flavoinoid, a lignan, a stilbene or a juvabione, wherein the flavoinoid is pinocembrin, dihydrokaempferol, pinobanksin, naringenin, catechin, 2,4,6-trihydroxychalcone, aromadendrin or taxifolin; the lignan is lariciresinol, isolariciresinol, secoisolariciresinol, matairesinol, liovil or nortrachelogenin (NTG); the stilbene is pinosylvin, dihydropinosylvin, pinosylvin monomethyl ether, methylpinosylvin, methyldihydropinosylvin, or reservatrol, and the juvabione is epijuvabione acid,
- a Pseudotsuga genus and the isolated substance is a lignan, which is lariciresinol, isolariciresinol or secoisolariciresinol; or the isolated substance is a juvabione such as dihydroepijuvabione,
or the wood is hardwood.

### BRIEF DESCRIPTION OF THE DRAWINGS

Figure 1 shows a vertical cross section of a tree stem with a branch, and a vertical cross section of the branch. The figure shows further sampling of the knots and branches for studying the distribution of lignans. The dashed vertical line along the outermost layer of the bark-free stem wood is defined as zero line (0 cm).
Figures 2A to 2E show the distribution of total lignan in opposite wood (diamonds), side wood (filled squares) and compression wood (filled triangles) of five knot and samples and three branch samples, taken at various positions from the zero line shown in Figure 1.

### DETAILED DESCRIPTION OF THE INVENTION

The term "phenolic substances" shall be understood to cover lignans, oligolignans, flavonoids, isoflavonoids, stilbenes, tannins and phenolic acids.

All these groups are mainly hydrophilic substances that can be extracted with polar, i.e. hydrophilic solvents.

The term "knotwood" shall be understood to include the "knots", i.e. the part of the branches that is embedded in the stem, and the branches extending outwards from the stem.

The "over-sized chip fraction" means the rejected fraction obtained in the screening stage of the chips aimed for the pulping process. This over-sized chip fraction, which can constitute about 1 to 5 % of the total amount of wood chipped, cannot be forwarded as such to the pulping process. Up to now, this fraction has been recirculated to the chipping stage or withdrawn to be burnt. This over-sized fraction comprises in addition to knotwood also considerable amounts of "normal wood", i.e wood usable in the pulping process. The amount of knotwood in the over-sized chip fraction depends on the wood species and wood quality used, and is estimated to about 10-30 %. The content of knotwood in the over-sized chip fraction is hereinafter also called "knot-rich fraction".

Although it is possible to use the over-sized chip fraction as such for extraction of phenolic substances, it may be preferable to first separate the material into a knot-rich fraction and a knot-poor fraction and to use the knot-rich fraction for extraction. The "knot-poor fraction" means the "normal wood" that can be led to the pulping process. This separation can be made directly from the over-sized chip fraction, or the material can first be refined before the screening stage.

"Knotwood obtained as residue in finishing of mechanical wood products" includes, for example, the plywood sheet pieces which include knots and are cut out and replaced by corresponding pieces of normal plywood in the manufacturing stage before the individual plywood sheets are pasted together to form the finished product. Other examples are pieces of planks and boards rich in knots and therefore rejected for various reasons in building and construction, in furniture industry and the like. Also sawdust is an example of such residues. However, the useful residues are not restricted to those listed herein.

The "polar solvent" is either a single polar agent, or a mixture of two or more polar agents, where said polar agent or agents have a dielectric constant that is greater than 3, determined at 25 Celsius degrees. As examples of polar solvents can be mentioned pure water only, and mixtures of water and acetone and water and alcohol, such as water and ethanol.

The extraction can be carried out on dried wood or on raw wood material.

Although the extraction can be physically integrated with the utilization of wood in the manufacturing of pulp or mechanical wood products, the extraction can alternatively be carried out as a separate process, because the knotwood, especially the knot-rich fraction of the over-sized chips, can easily be transported and stored for later processing.

The amount of phenolic substances in knotwood varies greatly and depends on the phenolic substance in question and the wood species used. Therefore, the extract derived from the extraction stage may contain considerable concentrations of a desired phenolic compound, and may therefore, depending on the purpose, be used as such without further purification.

In case further purification is needed, the methods to be used depend i.a. on the substance to be isolated and the desired degree of purity. As examples of useful purification methods can be mentioned chromatography or crystallization.

As important lignans to be isolated by the method of this invention can be mentioned hydroxymatairesinol, allohydroxymatairesinol, matairesinol, conidendrin, pinoresinol, oxomatairesinol, lariciresinol, liovil, isolariciresinol, secoisolariciresinol, picearesinol, conidendric acid, and nortrachelogenin. However, the term "lignans" is not restricted to these compounds.

"Oligolignans" are compounds having 3 to 6 phenylpropane units that are beta-beta linked instead of normal lignans which have two beta-beta linked phenylpropane units.

As examples of flavonoids which can be isolated according to the method of this invention can be mentioned pinocembrin, dihydrokaempferol, pinobanksin, naringenin, catechin, 2,4,6-trihydroxychalcone, aromadendrin and taxifolin.

As examples of stilbenes can be mentioned pinosylvin, pinosylvin monomethyl ether, dihydropinosylvin, methylpinosylvin , methyldihydropinosylvin and reservatrol.

As examples of juvabiones can be mentioned epijuvabione, dehydrojuvabione, dihydroepijuvabione and epijuvabione acid.

The isolation of phenolic substances or juvabiones from knotwood is very advantageous compared to the utilization of other sources. In the knot-rich fraction of the over-sized chips, the concentration of these substances is 10 to 1000 times higher than in normal wood. Many of these compounds cannot be located at all in normal wood. As a result, about 10-50 % of the extract obtained according to this method may be the phenolic agent or agents. Another interesting feature is that a certain compound may be the dominating compound of the derived phenolic group of substances. For example, hydroxymatairesinol may be about 65-85 % of the lignans derived from spruce knotwood.

This invention thus offers a unique method for deriving the desired phenolic compound or juvabione in high concentrations in the extract. Along with this advantage, the wood material utilized for the extraction is material that hitherto has been regarded as a wood fraction useful as energy source only.

The invention will be illuminated by the following non-restrictive Experimental Section.

### EXPERIMENTAL SECTION

Three different studies were carried out. In a first study, three trees of Norway spruce (Picea abies) were investigated to reveal information on the total lignan, hydroxymatairesionol and oligolignan distribution in the knots and branches (Study 1). In a second study, seven trees of Norway spruce (Picea abies) were studied to reveal information on the total lignan, hydroxymatairesinol and certain other lignans and oligolignan distribution in the knots and branches (Study 2). In a third study (Study 3), the content of various lignans in three Abies species, three Picea species, two Larix species and three Pinus species were investigated. In this study, also the contents of various stilbenes and flavonoids were investigated. The methods used in Study 3 were similar to those used in Study 1 and 2. The results from Study 3 is shown in Table 5. Furthermore, samples from birch (Betula) and aspen (Populus) have also been investigated according to the method of this invention. In aspen, the flavonoids dihydrokaempferol and naringenin were found, while certain stilbenes were found in birch.

### STUDY 1

### Material

Three healthy Norway spruce trees (Table 1), grown in southern Finland, were cut in May and discs were stored at -24°C. The heartwood from several knots with a dead branch (DK), still attached or fallen off, and several knots with a living branch (LK) were sampled (Table 1). Stem heartwood (HW) and sapwood (SW), with no visible compression wood, was sampled at 1.5 m height from each tree.

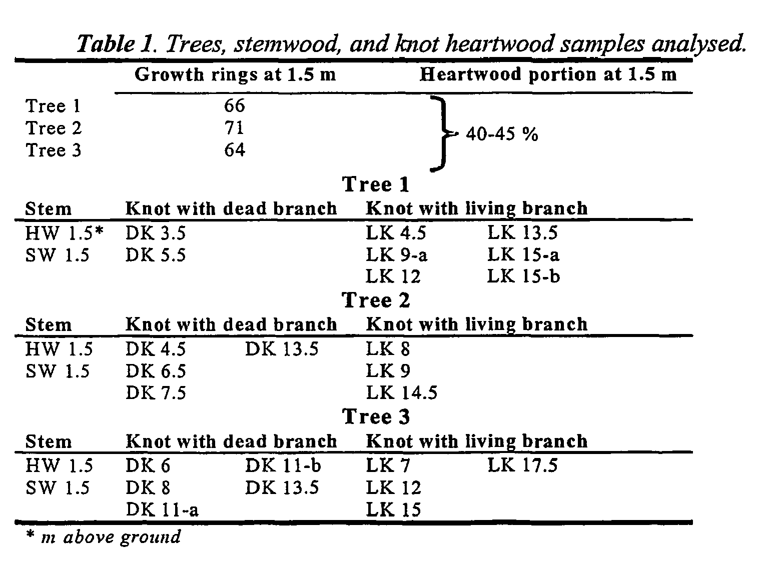

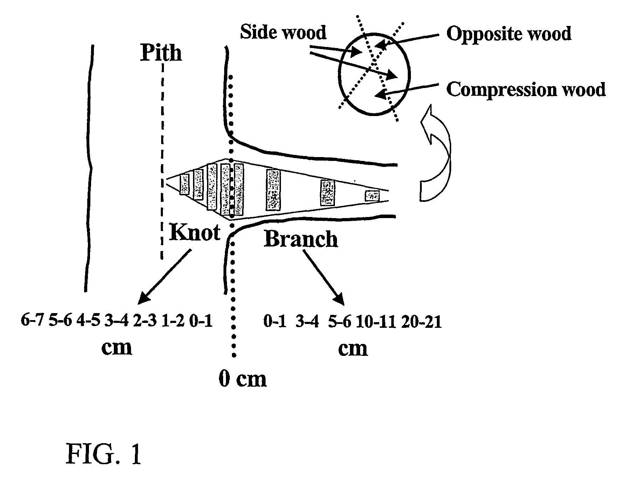

The heartwood of five additional knots and three branches were split into 1 cm thick sections and further divided into opposite, side, and compression wood, for examining the distribution of lignans (Fig. 1).

### Methods

The wood samples were splintered, freeze-dried and ground in a Wiley mill, producing particles passing a 10-mesh screen. A second freeze-drying step after the milling ensured almost complete removal of volatile compounds. The wood samples for the lignan distribution study were freeze-dried, splintered using a scalpel, and freeze-dried again.

Sequential extraction was carried out in an ASE-apparatus (Accelerated Solvent Extractor). The lipophilic extractives were first extracted with hexane (solvent temperature 90°C, pressure 13.8 MPa, 2 × 5 min static cycles) and then the hydrophilic extractives were extracted with an acetone:water (95:5 v/v) mixture (solvent temperature 100°C, pressure 13.8 MPa, 2 × 5 min static cycles). The samples for the lignan distribution study were extracted only with an acetone:water (95:5 v/v) mixture (as above, 3 × 5 min static cycles).

Lignans, free fatty acids, resin acids and free sterols were, after evaporation of the extract solutions and silylation of the extractives, analysed on a 25 m × 0.20 mm i.d. crosslinked methyl polysiloxane column (HP-1). Heneicosanic acid and betulinol were used as internal standards. A correction factor of 1.2 for betulinol was used for the quantification of the lignans. All results given as mg/g or % (w/w) are calculated on a freeze-dried wood basis.

Oligolignans, in the same silylated samples as above, were analysed according to (6) using cholesteryl heptadecanoate as internal standard.

Identification of individual components was done by GC-MS analyses of the silylated components with an HP 6890-5973 GC-MSD instrument, using a similar GC column as above.

### Results

The lignans and oligolignans were the main components of the hydrophilic extractives in all samples (Table 2). Small amounts (<1.1 mg/g) of monomeric sugars were also found in most samples. Trace amounts (<0.2 mg/g) of simple phenols, dominated by coniferyl alcohol and vanillic acid, were also present in all samples.

The amount of lignans was extremely high in the knots, between 6 and 16% (w/w), compared to the maximum of 0.2% in the stemwood (Table 2). The variation in the total amount of lignans was large among the knots of a single tree and also between the different trees. There seemed to be no difference between knots with a living and a dead branch. The identified lignans were the same as found earlier in Norway spruce (7). Ten unidentified lignans were also detected and quantified. The sum of the two isomers of hydroxymatairesinol (HMR) dominated all samples.

Two groups of a complex mixture of oligomeric phenolic substances were detected and quantified by GC (Table 2). Preliminary size-exclusion fractionation and MS studies showed these compounds to be composed of phenylpropane units similar to those of lignans. The SEC and GC retention times suggested that these compounds were oligomeric (trimeric and tetrameric) lignans, here called oligolignans. The total amount of oligolignans ranged between 2 and 4% (w/w) in the knots. The amount of oligolignans was about 20-30% of the amount of lignans in all knots.

**Table 2. The amount of lignans and oligolignans in the stem wood and knot heartwood samples. HMR was the most abundant lignan in all samples.**

| | **Lignans** | | **Oligolignans** | |
|---|---|---|---|---|
| | Total mg/g | HMR % of total | Trimers mg/g | Tetramers mg/g |
| **Tree 1** | | | | |
| HW 1.5 | 1.1 | 44 | 0.26 | 0.18 |
| SW 1.5 | 0.7 | 53 | 0.17 | 0.08 |
| DK 3.5 | 118 | 66 | 17 | 13 |
| DK 5.5 | 123 | 68 | 17 | 10 |
| LK 4.5 | 119 | 68 | 22 | 10 |
| LK 9-a | 124 | 69 | 21 | 9 |
| LK 12 | 159 | 73 | 26 | 12 |
| LK 13.5 | 120 | 73 | 20 | 10 |
| LK 15-a | 156 | 77 | 24 | 15 |
| LK 15-b | 149 | 80 | 25 | 14 |

| **Tree 2** | | | | |
|---|---|---|---|---|
| HW 1.5 | 0.5 | 17 | 0.11 | 0.05 |
| SW 1.5 | 0.2 | 25 | 0.07 | 0.03 |
| DK 4.5 | 90 | 76 | 11 | 11 |
| DK 6.5 | 134 | 75 | 16 | 14 |
| DK 7.5 | 144 | 73 | 18 | 14 |
| DK 13.5 | 117 | 76 | 15 | 11 |
| LK 8 | 142 | 74 | 18 | 10 |
| LK 9 | 129 | 75 | 17 | 10 |
| LK 14.5 | 154 | 77 | 21 | 9 |

| **Tree 3** | | | | |
|---|---|---|---|---|
| HW 1.5 | 2.2 | 37 | 0.32 | 0.13 |
| SW 1.5 | 0.2 | 25 | 0.06 | 0.02 |
| DK 6 | 63 | 72 | 8 | 10 |
| DK 8 | 75 | 74 | 10 | 13 |
| DK 11-a | 124 | 76 | 17 | 14 |
| DK 11-b | 77 | 76 | 11 | 10 |
| DK 13.5 | 114 | 81 | 14 | 13 |
| LK 7 | 95 | 77 | 12 | 13 |
| LK 12 | 145 | 82 | 16 | 9 |
| LK 15 | 104 | 77 | 17 | 8 |
| LK 17.5 | 134 | 76 | 25 | 14 |

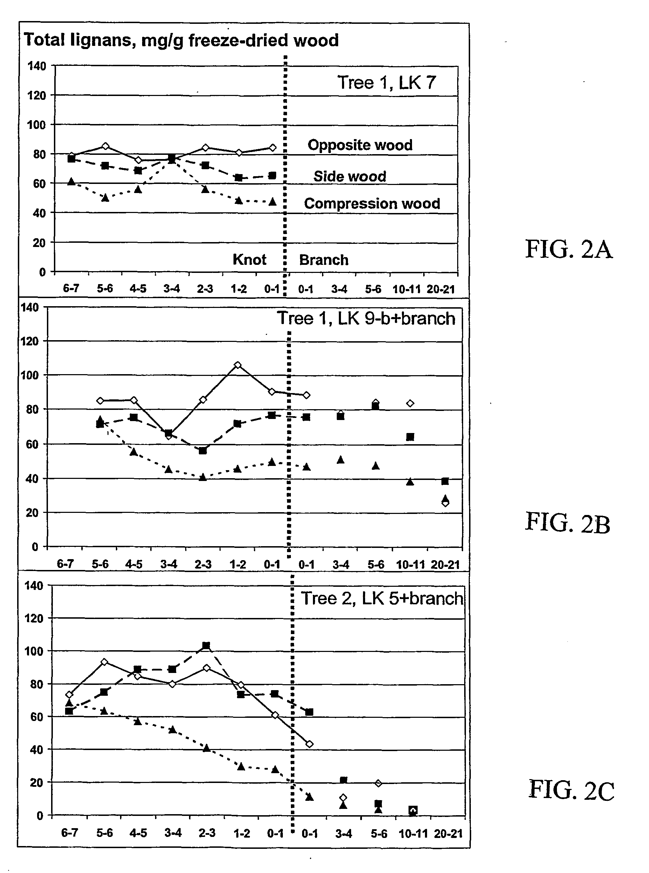

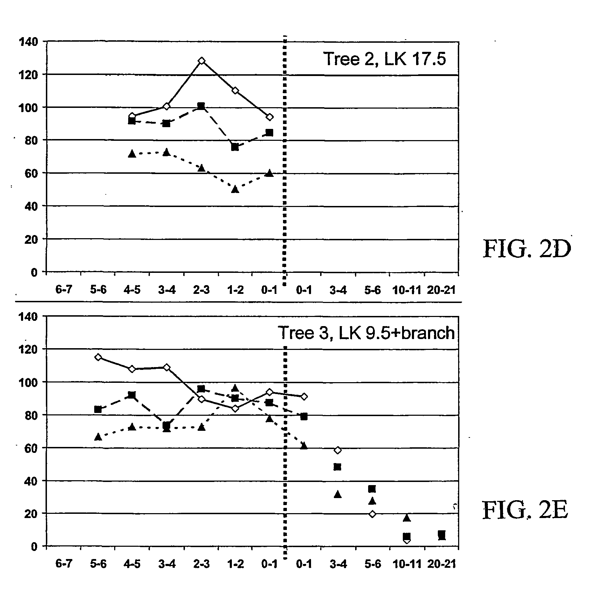

Figures 2A to 2E show the distribution of lignans from near the base of the knot to 10-20 cm out in the branch. The lignans were almost absent 20 cm out in the branches from Tree 2 and 3, while they had decreased strongly in the branch from Tree 1. The amount of lignans in a radial direction, from the pith into the outer branch, was quite even inside the stem. The concentration of lignans decreased in the order opposite wood - side wood - compression wood. However, since knots usually contain smaller amounts of opposite wood than side wood and compression wood, the highest amount of lignans is situated in side wood and compression wood.

### STUDY 2

In this study, results are reported from analysis of the hydrophilic and lipophilic extractives of knots from seven Norway spruce trees. The objective was to determine the amount and composition, as well as the variability within a tree and between trees, of the extractives in knotwood and stemwood. We were also interested in differences due to geographical location, why two of the seven trees were sampled from northern Finland.

### Material

Seven healthy Norway spruce trees (Table 3) were felled, and samples of stemwood and knots were sawn and put into storage at -24°C within 6 h. Trees 1-3 were felled in May, trees 4-5 in January, and trees 6-7 in October. Trees 1-3 and 6-7 were densely grown in sandy soil, while trees 4-5 were planted on former arable land. Trees 1-5 had an average diameter of about 30 cm at 1.5 m height, while the diameters of trees 6-7 were about 25 cm. Trees 4-5 had grown fast. The heartwood from knots at a dead branch (DK), still attached or fallen off, and knots at a living branch (LK) were sampled. For short, the expression knots means knot heartwood. Stem heartwood (HW) from trees 1-3 and 6-7 and stem sapwood (SW) from trees 1-7, with no visible reaction or decayed wood, was sampled at 1.5 m height. The number in each sample code (e.g. DK 3.5) expresses the height in meters above ground while the suffix a or b expresses different knots at the same height. The heartwood of seven additional knots and five branches were split into 1 cm thick discs and further divided into opposite, side, and compression wood, for examining the distribution of lignans (Fig. 1).

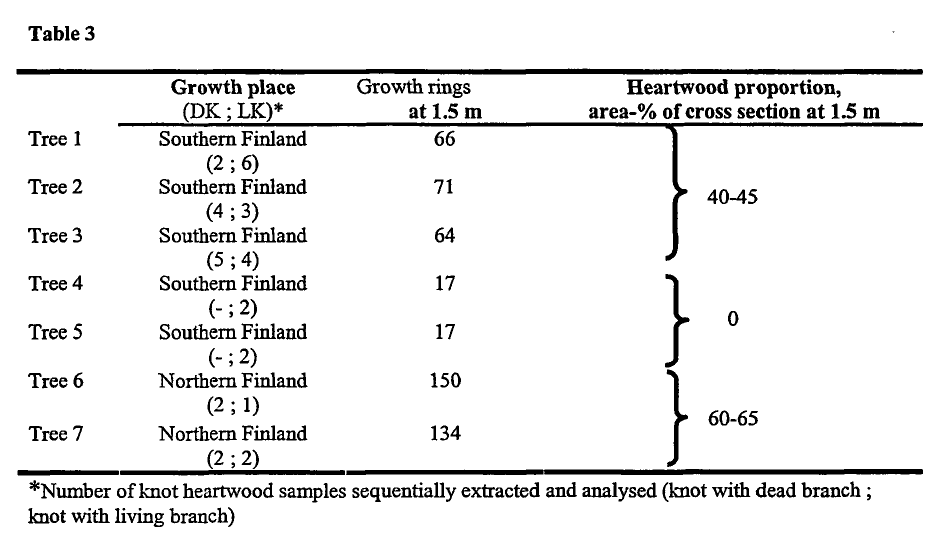

The methods for isolation and analysis of the isolated substances were essentially those described in Study 1 above.

### Results

The lignans and oligolignans were the main components of the hydrophilic extractives (Table 4). In addition, mainly small amounts of monomeric sugars, simple phenols (or monolignols), and dimeric non-lignan aromatic compounds of dilignoltype, such as 1,3-(bis-guaiacyl)-1,2-propandiol, were detected in most samples. The amount of lignans was exceptionally large in the knots compared to the stemwood (Table 4). The knots of the trees from northern Finland contained 14-24% (w w⁻¹), while the knots from southern Finland contained 6-16% (w w⁻¹) of lignans. Even the knots from the young trees contained 4-8% (w w⁻¹) lignans. Lignans were found in small amounts also in the sapwood.

The variation in the content of lignans was large between the knots of a single tree and also between knots from different trees. The largest amounts of lignans were found in living knots in all trees. It is not possible to draw any conclusions whether the larger amounts of lignans in the knots from the northern trees are due to higher age or place of growth, since the trees from different location were of different age. The tree genotype was however different depending on the geographical location. The branches of the northern trees have a smaller angle between the stem and the downside of the branch. This is typical for Norway spruce trees grown north of the pole circle. This, and the fact that the climate is harder, would certainly cause another type of stress on the knots than for trees from southern Finland. It has been suggested earlier that external stress, causing eccentric growth of Norway spruce stems, is associated with higher lignan concentrations (2).

The main identified lignans were mainly the same as found earlier in Norway spruce (7). The identified lignans were two epimers of hydroxymatairesinol (HMR), α-conidendrin, liovil (two isomers), secoisolariciresinol, lariciresinol, pinoresinol, matairesinol, isolariciresinol, α-conidendric acid and a lignan called lignan A. Seven unknown minor lignans were also detected and quantified. The two epimers of HMR dominated in all knots (Table 4). The epimers are here called HMR 1 and HMR 2 based on their elution order on GC. The structure of the major lignan, HMR 2, and its minor epimer, HMR 1 or allo-HMR, has been discussed in the literature (8, 9). The ratio HMR 2/HMR 1 was between 2 and 4 in trees 1-2 and 6-7, while the range was 2-7 in tree 3, 4-5 in tree 4, and 1-3 in tree 5. HMR was the dominating lignan also in the stem sapwood and heartwood samples, even though the contribution of the other lignans was higher. The ratio HMR 2/HMR 1 was between 2 and 5 in heartwood and even up to 11 in sapwood. In the knots from tree 6 and 7 we found a lignan that has not been identified earlier in spruce trees, in amounts ranging from 2 to 7 mg g⁻¹. The mass spectrum and the GC retention time were the same as for the lignan (-)-nortrachelogenin (NTG) which was recently identified in knot heartwood of Pinus sylvestris (10). However, the NTG-enantiomer (+)-wikstromol will have the same mass spectrum and retention time. Since it was not possible to obtain the lignan in enough pure form for determining the optical rotation, it remains unclear, which of the enantiomers occurs in Norway spruce. Also an earlier name, pinopalustrin, has been suggested for NTG (11, 12).

The volume of the pith was quite large compared to the total knot volume in most knots. Even though the dry mass of the pith is small compared to the total knot mass, it was of interest to analyse the extractives in the pith. The pith material contained mainly lignans, about 120 mg g⁻¹, with HMR as the most abundant lignan. Small amounts of an NTG-isomer, with the same mass spectrum but different GC retention time, was also identified in the pith material.

**Table 4**

| | **Lignans** | | | | | | **Oligolignans** | |
|---|---|---|---|---|---|---|---|---|
| | Total amount | HMR* | Coni* | Liovil | Seco* | Other | Total amount** | Trimers |
| | mg/g | % of total lignans | | | | | mg/g | % |
| **Tree 1, southern Finland, 66 years** | | | | | | | | |
| HW 1.5 | 0.9 | 52 | 6 | 9 | 5 | 28 | 0.4 | 59 |
| SW 1.5 | 0.6 | 57 | 3 | 16 | 5 | 20 | 0.3 | 67 |
| DK 3.5 | 115 | 68 | 6 | 5 | 10 | 11 | 30 | 58 |
| DK 5.5 | 120 | 70 | 4 | 6 | 9 | 12 | 27 | 61 |
| LK 4.5 | 116 | 70 | 9 | 4 | 4 | 13 | 32 | 69 |
| LK 9-a | 120 | 71 | 5 | 5 | 7 | 12 | 29 | 71 |
| LK 12 | 159 | 73 | 3 | 5 | 6 | 12 | 38 | 68 |
| LK 13.5 | 117 | 75 | 4 | 5 | 4 | 12 | 30 | 68 |
| LK 15-a | 152 | 80 | 3 | 3 | 3 | 12 | 38 | 62 |
| LK 15-b | 149 | 79 | 4 | 3 | 3 | 11 | 39 | 64 |

| **Tree 2, southern Finland, 71 years** | | | | | | | | |
|---|---|---|---|---|---|---|---|---|
| HW 1.5 | 0.3 | 28 | 4 | 12 | 3 | 54 | 0.1 | 70 |
| SW 1.5 | 0.1 | 37 | 3 | 10 | 7 | 44 | 0.2 | 69 |
| DK 4.5 | 88 | 78 | 7 | 4 | 2 | 10 | 22 | 51 |
| DK 6.5 | 131 | 76 | 5 | 4 | 4 | 11 | 30 | 54 |
| DK 7.5 | 141 | 75 | 5 | 4 | 6 | 11 | 32 | 55 |
| DK 13.5 | 114 | 78 | 4 | 3 | 4 | 11 | 26 | 57 |
| LK 8 | 139 | 76 | 5 | 3 | 5 | 11 | 29 | 64 |
| LK 9 | 126 | 76 | 4 | 3 | 5 | 11 | 26 | 63 |
| LK 14.5 | 151 | 79 | 3 | 5 | 2 | 11 | 30 | 69 |

| **Tree 3, southern Finland, 64 years** | | | | | | | | |
|---|---|---|---|---|---|---|---|---|
| HW 1.5 | 1.9 | 43 | 2 | 20 | 9 | 25 | 0.1 | 72 |
| SW 1.5 | 0.1 | 33 | 3 | 19 | 8 | 37 | 0.4 | 71 |
| DK 6 | 61 | 75 | 8 | 6 | 3 | 9 | 18 | 45 |
| DK 8 | 71 | 78 | 6 | 7 | 1 | 8 | 23 | 43 |
| DK 11-a | 119 | 79 | 4 | 7 | 1 | 8 | 31 | 56 |
| DK 11-b | 74 | 79 | 5 | 6 | 1 | 8 | 20 | 52 |
| DK 13.5 | 111 | 84 | 4 | 3 | 1 | 8 | 27 | 51 |
| LK 7 | 92 | 80 | 7 | 4 | 2 | 8 | 25 | 48 |
| LK 12 | 141 | 85 | 4 | 3 | 1 | 8 | 25 | 65 |
| LK 15 | 101 | 79 | 2 | 9 | 1 | 9 | 25 | 67 |
| LK 17.5 | 131 | 78 | 1 | 10 | 1 | 10 | 39 | 64 |

| **Tree 4, southern Finland, 17 years** | | | | | | | | |
|---|---|---|---|---|---|---|---|---|
| SW 1.5 | 0.3 | 38 | <1 | 25 | 8 | 28 | 0.4 | 56 |
| LK 3.5 | 47 | 72 | 1 | 8 | 11 | 9 | 19 | 63 |
| LK 5.5 | 355 | 73 | 1 | 8 | 10 | 8 | 16 | 62 |

| **Tree 5, southern Finland, 17 years** | | | | | | | | |
|---|---|---|---|---|---|---|---|---|
| SW 1.5 | 0.6 | 53 | 6 | 19 | 6 | 16 | 0.4 | 59 |
| LK 4 | 77 | 66 | <1 | 6 | 20 | 9 | 23 | 62 |
| LK 6 | 39 | 80 | <1 | 6 | 8 | 6 | 23 | 61 |

| **Tree 6, northern Finland, 150 years** | | | | | | | | |
|---|---|---|---|---|---|---|---|---|
| HW 1.5 | 2.5 | 51 | 11 | 8 | 9 | 21 | 0.2 | 69 |
| SW 1.5 | 0.2 | 28 | <1 | 17 | 25 | 30 | 0.9 | 66 |
| DK 2.5 | 139 | 71 | 9 | 3 | 6 | 10 | 31 | 42 |
| DK 3 | 138 | 71 | 10 | 3 | 5 | 11 | 34 | 42 |
| LK 9 | 171 | 77 | 8 | 3 | 2 | 10 | 33 | 45 |

| **Tree 7, northern Finland, 134 years** | | | | | | | | |
|---|---|---|---|---|---|---|---|---|
| HW 1.5 | 1.2 | 44 | 7 | 13 | 9 | 26 | 0.4 | 60 |
| SW 1.5 | 0.6 | 28 | 1 | 26 | 19 | 25 | 0.9 | 59 |
| DK 4 | 171 | 73 | 6 | 5 | 4 | 13 | 43 | 46 |
| DK 5 | 172 | 73 | 6 | 4 | 5 | 12 | 48 | 43 |
| LK 6 | 209 | 74 | 6 | 5 | 4 | 12 | 56 | 49 |
| LK 8 | 244 | 72 | 6 | 5 | 3 | 14 | 44 | 49 |

| | | | | | | | | |
|---|---|---|---|---|---|---|---|---|
| * HMR = hydroxymatairesinol; Coni = α-conidendrin, Seco = secoisolariciresinol ** trimers and tetramers determined by GC | | | | | | | | |

Table 5 shows the results from Study 3.

**Table 5**

| Hydrophilic extractives, % of dry knot wood | | | | | |
|---|---|---|---|---|---|
| | **Abies** | | | **Larix** | |
| | alba | balsamea | sibirica | sibirica | lariciana |
| *Lignans:* | | | | | |
| Isolariciresinol | 0.6 | 0.3 | | | |
| Secoisolariciresinol | **3.9** | **4.1** | **3.0** | **1.4** | **1.3** |
| Lariciresinol | 0.8 | 2.1 | 0.8 | 0.3 | 0.1 |
| *Flavonoids:* | | | | | |
| 3,5,7,4',x- | | | | | |
| pentahydroxy flavanone | | | | 0.3 | 0.5 |
| | | | | | |

| Hydrophilic extractives, % of dry knot wood | | | | | |
|---|---|---|---|---|---|
| | **Picea** | | | | |
| | abies | glauca | sitchensis | | |
| *Lignans:* | | | | | |
| Secoisolariciresinol | 0.6 | 0.3 | | | |
| Liovil | | | 0.2 | | |
| HMR(1) | 2.1 | 0.8 | | | |
| HMR(2) | **6.0** | **4.3** | | | |
| | | | | | |

| Hydrophilic extractives, % of dry knot wood | | | | | |
|---|---|---|---|---|---|
| | **Pinus** | | | | |
| | contorta | sibirica | sylvestris | | |
| *Lignans:* | | | | | |
| Isolariciresinol | | 0.4 | | | |
| Secoisolariciresinol | | 0.3 | 0.02 | | |
| Liovil | 0.04 | | | | |
| Iariciresinol | | **2.6** | | | |
| NTG | 0.1 | | **1.7** | | |
| *Stilbenes:* | | | | | |
| Pinosylvin-Me | 0.1 | 2.4 | 1.0 | | |
| Pinosylvin | 0.2 | 0.9 | 1.1 | | |
| Dihydropinosylvin-Me | | 1.4 | | | |
| Dihydropinosylvin | | 0.2 | | | |
| *Flavonoids:* | | | | | |
| Pinocembrin | 0.2 | 0.5 | | | |
| Pinobanksin | 0.1 | 0.2 | | | |
| Dihydrokaempferol | 0.05 | 0.02 | | | |

Additional wood species were investigated according to the methods described above and the following results were obtained:
Abies concolor (secoisolariciresinol 2.5 %, HMR 21.1%)
Abies lasiocarpa (epijuvabione 1.1 %, dehydrojuvabione 0.8 %)
Picea mariana (HMR 2 3.5 %)
Pseudotsuga menziesii (dihydroepijuvabione 0.7 %, isolariciresinol 6.3 %, secoisolariciresinol 2.0 %, lariciresinol 1.5 %)
Pinus banksiana (epijuvabione acid 1.2 %, pinosylvin monomethyl ether 1.1 %, nortrachelogenin 1.3 %)
Pinus resinosa (pinosylvin 1.4 %, pinosylvin monomethyl ether 2.8 %, matairesinol 1.2 %)
Larix decidua (dihydrokaempferol 1.1 %, taxifolin 2.8 %, isolariciresinol 1.1 %, secoisolariciresinol 4.8 %, lariciresinol 1.3 %)
Betula pendula, Betula verrucosa, Alnus incana (several stilbene glycosides 1-2 %)

### REFERENCES

1. Freudenberg K and Knof L, "Lignanes des Fichtenholzes". Chem. Ber. 90, 2857-69, 1957.
2. R. Ekman, "Distribution of lignans in Norway spruce", Acta Acad. Abo, Ser. B, 39:3, 1-6 (1979).
3. S. Nishibe, "Bioactive phenolic compounds for cancer prevention from herbal medicines", In Food Factors for Cancer Prevention, Ed. by H. Ohigashi, T. Osawa, J. Terao, S. Watanabe and T. Yoshikawa, Springer-Verlag, Tokyo, 276-279 (1997).
4. J.D. Ford, L.B. Davin and N.G. Lewis, "Plant lignans and health: Cancer chemoprevention and biotechnological opportunities", In Plant Polyphenols 2: Chemistry, Biology, Pharmacology, Ecology, Ed. by G.G. Gross, R.W. Hemingway and T. Yoshida, Kluwer Academic/Plenum Publishers, New York, 675-694 (1999).
5. N.M. Saarinen, A. Wärri, S.I. Mäkelä, C. Eckerman, M. Reunanen, M. Ahotupa, S.M. Salmi, A.A. Franke, L. Kangas and R. Santti, "Hydroxymatairesinol, a novel enterolactone precursor with antitumor properties from coniferous tree (Picea abies)", Nutr. Cancer 36, 207-216 (2000).
6. F. Örså and B. Holmbom, "A convenient method for the determination of wood extractives in papermaking process waters and effluents", J. Pulp Pap. Sci. vol 20:12, J361-J366 (1994).
7. R. Ekman, "Analysis of lignans in Norway spruce by combined gas chromatography - mass spectrometry", Holzforschung 30, 79-85 (1976).
8. Kawamura F., H. Ohashi, S. Kawai, F. Teratani and Y. Kai. 1996. Photodiscoloration of Western hemlock (Tsuga heterophylla) sapwood II. Structures of constituents causing photodiscoloration. Mokuzai Gakkaishi. 42, 301-307.
9. Mattinen J., R. Sjöholm and R. Ekman. 1998. NMR-spectroscopic study of hydroxymatairesinol, the major lignan in Norway spruce (Picea abies) heartwood. ACH - Models Chem. 135, 583-590.
10. Ekman R., S. Willför, R. Sjöholm, M. Reunanen, J. Mäki, R. Lehtilä and C. Eckerman. 2001. Identification of the lignan nortrachelogenin in knot and branch heartwood of Scots pine (Pinus sylvestris L.). Holzforschung, in press.
11. Carnmalm B. 1959. Pinopalustrin, en ny lignan. In: Resumeer av sektionsföredrag. Svensk Kem. Tidskr. 71, 440.
12. Carnmalm B., H.G.H. Erdtman, G.C. Harris and T.F. Sanderson. 1977. The structure of pinopalustrin and its relations to other lignans. Acta Chem. Scand. B31, 433.

## Claims

1. Method for isolating of phenolic substances or juvabiones from wood comprising knotwood, said method comprising the steps of
a) extracting
i) the over-sized chip fraction obtained by screening chipped wood, or
ii) knotwood obtained as residue in finishing of mechanical wood products
with a polar solvent, and
b) recovering the extract,
wherein
the wood is coniferous wood selected from the group consisting of
- spruce wood of the genus Picea, and the isolated substance is a lignan such as hydroxymatairesinol, secoisolariciresinol or liovil, preferably hydroxymatairesinol,
- fir wood of the genus Abies and the isolated substance is a lignan such as secoisolariciresinol, lariciresinol or isolariciresinol, preferably secoisolariciresinol, or the isolated substance is epijuvabione or dehydrojuvabione,
- Larix genus and the isolated substance is a lignan such as secoisolariciresinol, lariciresinol or isolariciresinol, preferably secoisolariciresinol; or a flavonoid such as catechin, taxifolin or dihydrokaempferol,
- pine wood of the genus Pinus and the isolated substance is a flavoinoid, a lignan, a stilbene or a juvabione, wherein the flavoinoid is pinocembrin, dihydrokaempferol, pinobanksin, naringenin, catechin, 2,4,6-trihydroxychalcone, aromadendrin or taxifolin; the lignan is lariciresinol, isolariciresinol, secoisolariciresinol, matairesinol, liovil or nortrachelogenin (NTG); the stilbene is pinosylvin, dihydropinosylvin, pinosylvin monomethyl ether, methylpinosylvin, methyldihydropinosylvin, or reservatrol, and the juvabione is epijuvabione acid,
- a Pseudotsuga genus and the isolated substance is a lignan, which is lariciresinol, isolariciresinol or secoisolariciresinol;
or the isolated substance is a juvabione such as dihydroepijuvabione, or the wood is hardwood.

2. The method according to claim 1, wherein the polar solvent is either a single polar agent, or a mixture of two or more polar agents, said polar agent or agents having a dielectric constant that is greater than 3, determined at 25 Celsius degrees.

3. The method according to claim 1 or 2, wherein the extract is further purified for releasing the desired phenolic substance or juvabione.

4. The method according to any of the claims 1-3, wherein the wood is hardwood and the isolated substance is a flavonoid or a stilbene.

5. The method according to claim 4, wherein the hardwood is aspen and the isolated flavonoid is naringenin or dihydrokaempferol.

## Patentansprüche

1. Verfahren zur Isolierung von phenolischen Substanzen oder Juvabionen aus Holz, das Knotenholz umfasst, wobei das Verfahren die Schritte
a) Extrahieren
i) der Fraktion übergroßer Späne, die mittels Durchmusterung von Holzspänen erhalten wird, oder
ii) von Knotenholz, das als Rest bei der Endbearbeitung von mechanischen Holzprodukten erhalten wird,
mit einem polaren Lösungsmittel und
b) Gewinnen des Extrakts umfasst,
wobei das Holz Nadelholz ist, ausgewählt aus der Gruppe, bestehend aus
- Fichtenholz der Gattung Picea, und wobei die isolierte Substanz ein Lignan, zum Beispiel Hydroxymatairesinol, Secoisolariciresinol oder Liovil, vorzugsweise Hydroxymatairesinol, ist,
- Tannenholz der Gattung Abies und wobei die isolierte Substanz ein Lignan, zum Beispiel Secoisolariciresinol, Lariciresinol oder Isolariciresinol, vorzugsweise Secoisolariciresinol, ist oder die isolierte Substanz Epijuvabion oder Dehydrojuvabion ist,
- Larix-Gattung und wobei die isolierte Substanz ein Lignan, zum Beispiel Secoisolariciresinol, Lariciresinol oder Isolariciresinol, vorzugsweise Secoisolariciresinol, ist oder ein Flavonoid, zum Beispiel Catechin, Taxifolin oder Dihydrokaempferol, ist,
- Kiefernholz der Gattung Pinus und wobei die isolierte Substanz ein Flavoinoid, ein Lignan, ein Stilben oder ein Juvabion ist, wobei das Flavonoid Pinocembrin, Dihydrokeampferol, Pinobanksin, Naringenin, Catechin, 2,4,6-Trihydroxychalcone, Aromadendrin oder Taxifolin ist, wobei das Lignan Lariciresinol, Isolariciresinol, Secoisolariciresinol, Matairesinol, Liovil oder Nortrachelogenin (NTG) ist; das Stilben Pinosylvin, Dihydropinosylvin, Pinosylvin-Monomethylether, Methylpinosylvin, Methyldihydropinosylvin oder Reservatrol ist und das Juvabion Epijuvabionsäure ist,
- eine Pseudotsuga-Gattung ist und wobei die isolierte Substanz ein Lignan ist, welches Lariciresinol, Isolariciresinol oder Secoisolariciresinol ist; oder die isolierte Substanz ein Juvabion, zum Beispiel Dihydroepijuvabion, ist,
oder das Holz Hartholz ist.

2. Verfahren gemäß Anspruch 1, wobei das polare Lösungsmittel entweder ein einzelnes polares Mittel oder ein Gemisch aus zwei oder mehr polaren Mitteln ist, wobei das polare Mittel oder die polaren Mittel eine Dielektrizitätskonstante, bestimmt bei 25°C, haben, die größer als 3 ist.

3. Verfahren gemäß Anspruch 1 oder 2, wobei der Extrakt zur Freisetzung der gewünschten phenolischen Substanz oder des gewünschten Juvabion außerdem gereinigt wird.

4. Verfahren gemäß einem der Ansprüche 1 bis 3, wobei das Holz Hartholz ist und die isolierte Substanz ein Flavonoid oder ein Stilben ist.

5. Verfahren gemäß Anspruch 4, wobei das Hartholz Zitterpappel ist und das isolierte Flavonoid Naringenin oder Dihydrokaempferol ist.

## Revendications

1. Procédé d'isolement de substances phénoliques ou de juvabiones à partir de bois comprenant les bois noueux, ledit procédé comprenant les étapes consistant à :
a) extraire
i) la fraction de refus de copeaux obtenue en tamisant des copeaux de bois, ou
ii) le bois noueux obtenu en tant que résidu dans la finition de produits de bois mécaniques,
avec un solvant polaire, et
b) récupérer l'extrait,
dans lequel
le bois est un bois de conifère choisi dans le groupe formé par :
- le bois d'épicéa du genre *Picea,* et la substance isolée est une lignane telle que l'hydroxymataïrésinol, le sécoisolaricirésinol ou le liovil, de préférence l'hydroxymataïrésinol,
- le bois de sapin du genre Abies, et la substance isolée est une lignane telle que le sécoisolaricirésinol, le laricirésinol ou l'isolaricirésinol, de préférence le sécoisolaricirésinol, ou la substance isolée est l'épijuvabione ou la déhydrojuvabione,
- le genre *Larix,* et la substance isolée est une lignane telle que le sécoisolaricirésinol, le laricirésinol ou l'isolaricirésinol, de préférence le sécoisolaricirésinol ; ou un flavonoïde tel que la catéchine, la taxifoline ou le dihydrokaempférol,
- le bois de pin du genre *Pinus,* et la substance isolée est un flavonoïde, une lignane, un stilbène ou une juvabione, dans lequel le flavonoïde est la pinocembrine, le dihydrokaempférol, la pinobanksine, la naringénine, la catéchine, la 2,4,6-trihydroxychalcone, l'aromadendrine ou la taxifoline ; la lignane est le laricirésinol, l'isolaricrésinol, le sécoisolaricirésinol, le mataïrésinol, le liovil ou la nortrachélogénine (NTG) ; le stilbène est la pinosylvine, la dihydropinosylvine, l'éther monométhylique de pinosylvine, la méthylpinosylvine, la méthyldihydropinosylvine ou le réservatrol, et la juvabione est l'acide d'épijuvabione,
- un genre *Pseudotsuga,* et la substance isolée est une lignane qui est le laricirésinol, l'isolaricirésinol ou le sécoisolaricirésinol ; ou la substance isolée est une juvabione telle que la dihydroépijuvabione, ou le bois est un bois de feuillu.

2. Procédé selon la revendication 1, dans lequel le solvant polaire est soit un seul agent polaire, soit un mélange de deux agents polaires ou plus, le ou lesdits agents polaires ayant une constante diélectrique qui est supérieure à 3, déterminée à 25 degrés Celsius.

3. Procédé selon la revendication 1 ou 2, dans lequel l'extrait est en outre purifié pour libérer la substance phénolique ou la juvabione souhaitée.

4. Procédé selon l'une quelconque des revendications 1 à 3, dans lequel le bois est un bois de feuillu et la substance isolée est un flavonoïde ou un stilbène.

5. Procédé selon la revendication 4, dans lequel le bois de feuillu est le tremble et le flavonoïde isolé est la naringénine ou le dihydrokaempférol.
